**Europäisches Patentamt**

**European Patent Office**

**Office européen des brevets**

(19)

(11) Veröffentlichungsnummer: **0 246 398 B1**

(12) # EUROPÄISCHE PATENTSCHRIFT

(45) Veröffentlichungstag der Patentschrift: **16.10.91**

(51) Int. Cl.⁵: **B29C 45/17**

(21) Anmeldenummer: **87102416.2**

(22) Anmeldetag: **20.02.87**

(54) **Giessformwechseleinrichtung an einer Gruppe von Kunststoff-Spritzgiessmaschinen.**

(30) Priorität: **21.05.86 DE 3617094**

(43) Veröffentlichungstag der Anmeldung:
**25.11.87 Patentblatt 87/48**

(45) Bekanntmachung des Hinweises auf die
Patenterteilung:
**16.10.91 Patentblatt 91/42**

(84) Benannte Vertragsstaaten:
**AT CH DE FR GB IT LI NL**

(56) Entgegenhaltungen:
**EP-A- 0 111 570**
**DE-C- 3 242 169**

(73) Patentinhaber: **Hehl, Karl**
**Arthur-Hehl-Strasse 32**
**W-7298 Lossburg 1(DE)**

(72) Erfinder: **Hehl, Karl**
**Arthur-Hehl-Strasse 32**
**W-7298 Lossburg 1(DE)**

(74) Vertreter: **Mayer, Friedrich, Dr. et al**
**Patentanwälte Dr. Mayer & Frank Westliche 24**
**W-7530 Pforzheim(DE)**

**Beschreibung**

Die Erfindung betrifft eine Gießformwechseleinrichtung entsprechend dem Oberbegriff des Patentanspruches 1.

Bei einer bekannten Gießformwechseleinrichtung dieser Art (DE-PS 32 42 169), auf welcher der Oberbegriff des Anspruches 1 basiert, dient einer der beiden Stellplätze des Wechseltisches wechselweise als Adaptionsplatz zur Vorwärmung und sonstigen Vorbereitung der einzuwechselnden Spritzgießform. Beim Gießformwechsel laufen die Gießformbewegungen im Bereich des Formspannraumes und des Wechseltisches nach Programm, also vollautomatisch ab. Für die Überführung der ausgewechselten Spritzgießform zum Depot ist jedoch eine Integration der Steuerung in das Gießformwechsel-Gesamtprogramm nicht ohne weiteres möglich, weil das Gießformdepot nicht in einer festgelegten räumlichen Beziehung zur Spritzgießmaschine zu stehen braucht. Die Überführung erfolgt durch das Bedienungspersonal mittels eines Kranes. Insoweit sind bei dieser Überführung zusätzliche manuelle Steuerungs- und Transportmaßnahmen erforderlich.

Bei einer anderen bekannten Gießformwechseleinrichtung wird die Spritzgießform etwa in Brusthöhe auf einem Transportwagen zum Depot transportiert. Die Spritzgießmaschinen sind beidseits eines Schienenstranges des Transportwagen je mit ihrer Rückseite zueinander aufgestellt. Im Bedarfsfalle ist der Transportwagen mit einem Hub- und Drehwerk versehen ("Automatisieren im Spritzbetrieb - Symposium Mai 1986" veranstaltet von der Battenfeld Maschinenfabriken GmbH, Vortrag des Ing. Johann Holzschuh).

Es ist auch eine Gießformwechseleinrichtung vergleichbarer Art bekannt (EP-OS 0 092 686), bei welcher die Spritzgießform aus dem Formspannraum unmittelbar auf ein niveaugleiches Schienenfahrzeug überführt und mit diesem zum Gießformdepot transportiert wird.

Bei einer anderen bekannten Wechseleinrichtung zum Auswechseln von Arbeitseinheiten (Spritzgießformen und Plastifiziereinheiten) an wenigstens einer Spritzgießeinheit, übergreift ein Rahmengestell sowohl die Spritzgießmaschine als auch ein neben dieser angeordnetes Magazin für die genannten Einheiten. Auf dem Rahmengestell ist ein quer zur Maschinenachse bewegbarer Brückenkran mit parallel zur Maschinenachse bewegbarer Laufkatze gelagert, welch letztere einen vertikal bewegbaren Tragarm mit Greifvorrichtung aufweist. Beim Wechseln einer Einheit werden deren Kupplungen und Spannelemente gelöst, die Einheit mit der Greifvorrichtung erfaßt und im Magazin abgelegt. Sodann erfaßt die Greifvorrichtung im Magazin die einzuwechselnde Einheit und setzt sie in der Maschine ein. Das in aller Regel für mehrere Spritzgießmaschinen ausgelegte Transportsystem der Wechseleinrichtung ist prinzipiell in zwei horizontalen Richtungen erweiterbar, was jedoch eine entsprechende Vergrößerung des an der Decke des Raumes befestigten Rahmengestelles voraussetzt. Beim Transport der Einheiten von den Spritzgießmaschinen zum Magazin hängen die Einheiten am Tragarm der Laufkatze (im weiteren als 'hängender Transport' bezeichnet) und überfahren dabei notwendigerweise auch vom Bedienungspersonal beanspruchte Begehungsbereiche an den Spritzgießmaschinen (EP-PS 0 069 221).

Es ist auch bekannt, Spritzgießformen mittels eines drehbaren Tisches von einem Spritzgießautomaten in die Stellplätze eines daneben angeordneten Depots mit Hilfe eines drehbaren Tisches zu transferieren, der in einer vertikalen Trägersäule auf dem Niveau der übereinander angeordneten Stellplätze verfahrbar ist (DE-OS 16 29 746).

Bekannt ist es schließlich auch, die Eingabe und Entnahme von aufzubewahrenden Gegenständen an einem als Lager dienenden Schrank unter übergeordneten Gesichtspunkten von einem zentralen Rechner zu steuern, welcher Schrank nach dem Paternoster-Prinzip umlaufende Plattformen aufweist ("Zeitschrift für wirtschaftliche Fertigung", 79. Jahrg. 1984, Heft 3, S.136,137).

Ausgehend von dem genannten Stand der Technik liegt der Erfindung die Aufgabe zugrunde, eine Gießformwechseleinrichtung der eingangs genannten Art derart weiterzubilden, daß sie bei voller Automatisierung und verhältnismäßig geringen Fertigungskosten die Voraussetzungen für einen rationellen Wechselbetrieb für Spritzgießformen und Plastifiziereinheiten aufweist, in dem der Transportwagen und das Depot gleichermaßen für Spritzgießformen und Plastifiziereinheiten nutzbar ist ein Überfahren der Bedienungsseiten der Spritzgießmaschinen und damit des Bedienungspersonals im Gefolge eines 'hängenden Transportes' vermeidet und trotzdem eine raumsparende Anordnung in Anpassung an eine unterschiedliche und/oder wechselnde Anzahl von Spritzgießmaschinen gleicher oder unterschiedliche Größe ermöglicht.

Diese Aufgabe wird erfindungsgemäß durch die im Patentanspruch 1 genannten Merkmale gelöst.

Eine solche Lösung hat zudem den Vorteil, daß der Transportwagen beim Wechselbetrieb entlastet ist, weil die Spritzgießform und die Plastifiziereinheiten auf den Wechseltischen in Bereitschaftsstellung gehen können und der Transportwagen insoweit für den weiteren Wechselbetrieb unverzüglich frei wird.

Nachstehend wird die Gießformwechseleinrichtung anhand der Zeichnung beschrieben wobei in den Figuren 1-10 die Einrichtungen zum Wechsel der Plastifiziereinheiten weg gelassen sind.

Es zeigen:

Fig. 1     Eine Gruppe von Kunststoff-Spritzgießmaschinen mit der Gießformwechseleinrichtung in perspektivischer und schematischer Darstellung,

Fig. 2     einen Ausschnitt aus der Gießformwechselvorrichtung im Bereich der Transportbahn zwischen Formspannraum und Transportfahrzeug in Draufsicht in vergrößerter Darstellung,

Fig. 3,3a     Schnitte nach Linien III-III und IIIa-IIIa von Fig.2 in vergrößerter Darstellung (je mit zugehöriger Spritzgießform)

Fig. 4     einen Schnitt nach Linie IV-IV von Fig. 2,

Fig. 5,5a,5b     Ausschnitte aus der Gießformwechseleinrichtung im Bereich der Transportbahn zu einem Depotstellplatz,

Fig. 6     eine vergrößerte Spritzgießform der Gießformwechseleinrichtung in perspektivischer Darstellung,

Fig. 7-10     Schematas der Gießformwechselvorrichtung zur Verdeutlichung des Wechselprinzips,

Fig. 11     eine von der Gießformwechselvorrichtung betreute Spritzgießmaschine in Draufsicht mit einer Spritzgießform sowie einer Plastifiziereinheit auf Adaptionsplätzen des Wechseltisches (Hydraulikzylinder zur Steuerung der Versorgungsleitungen der Plastifiziereinheit ist weggelassen),

Fig. 12     einen Ausschnitt aus Fig. 11 (ohne Plastifiziereinheit auf dem Wechseltisch),

Fig. 13     die Spritzgießmaschine gemäß Fig. 11 in Stirnansicht mit Plastifiziereinheiten auf dem Wechseltisch,

Fig. 14     die Spritzgießmaschine gemäß den Figuren 11,13 in Seitenansicht (ohne Schutzabdeckungen im Bereich der Formschließeinheit),

Fig. 15,16     den Ausschnitt gemäß Fig. 11 in Seitenansicht vor Anschluß und nach Anschluß der Versorgungsleitungen an die auf dem Adaptionsplatz abgestellte Plastifiziereinheit,

Fig. 17     ein Schema zur Paternoster-Führung der Depotstellplätze im Bereich der Eingabe- bzw. Ausgabeöffnung des als Schrank ausgebildeten Depots und

Fig. 18-21     Schematas der Gießformwechseleinrichtung zur Verdeutlichung des Wechselprinzips beim Wechsel von Plastifiziereinheiten.

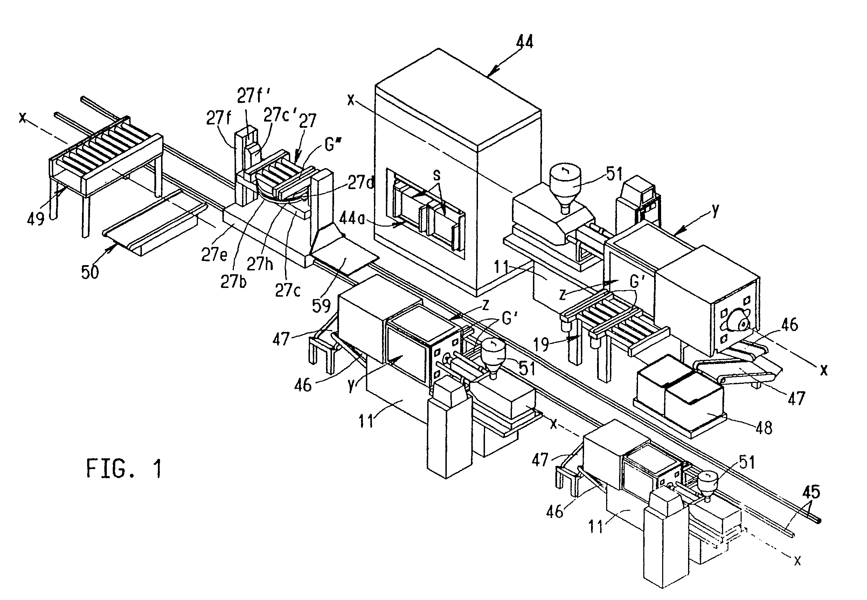

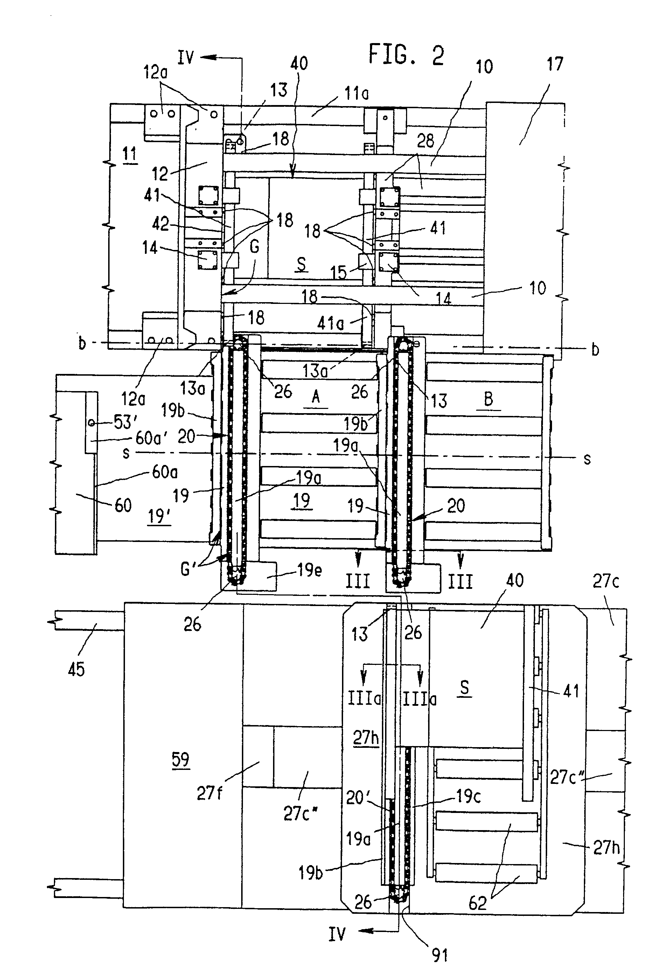

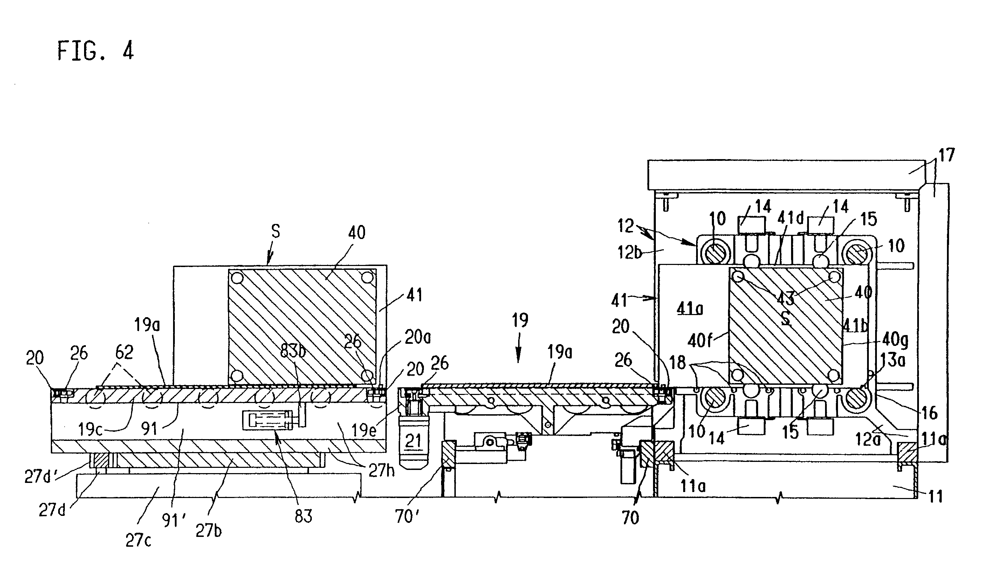

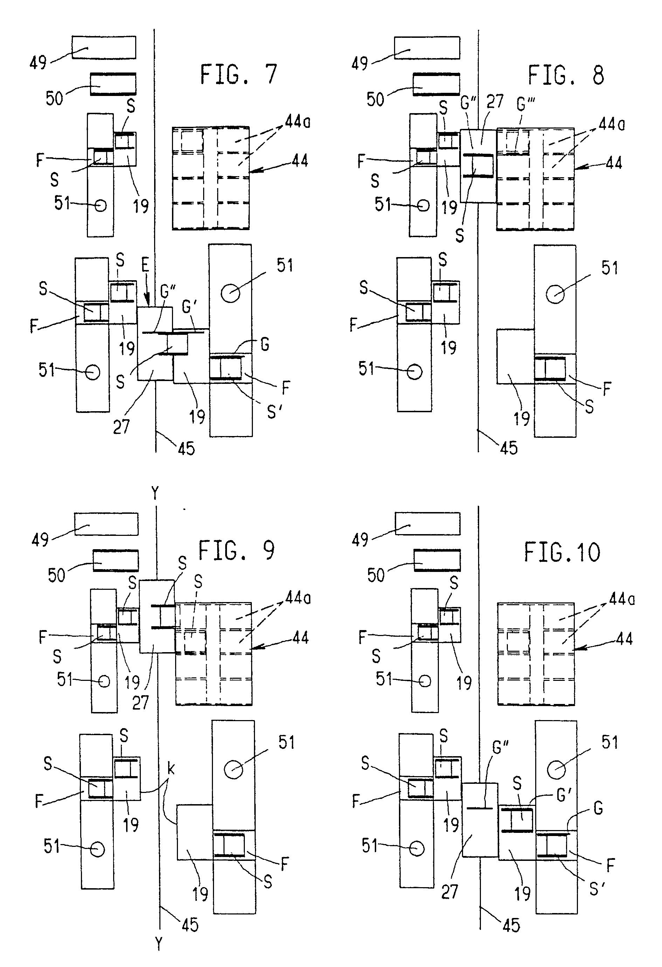

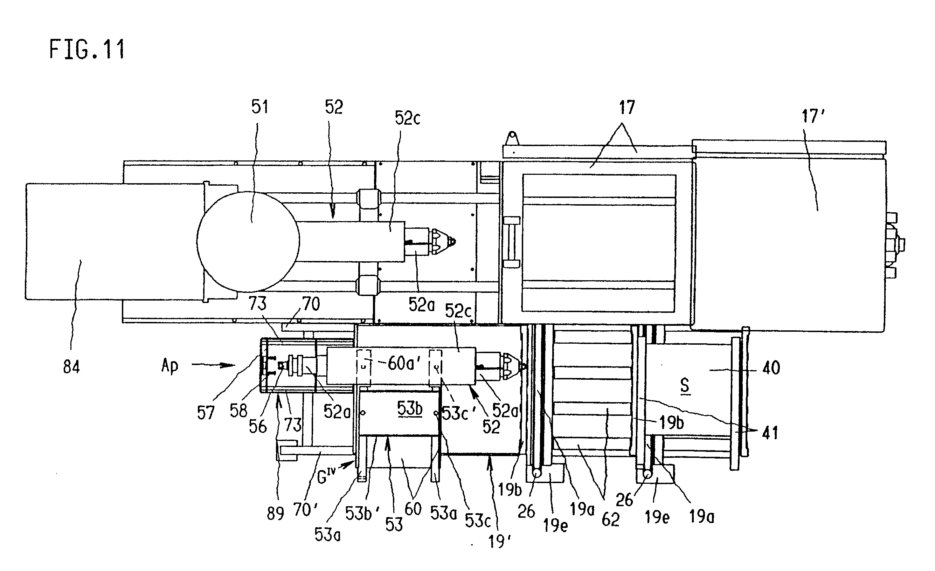

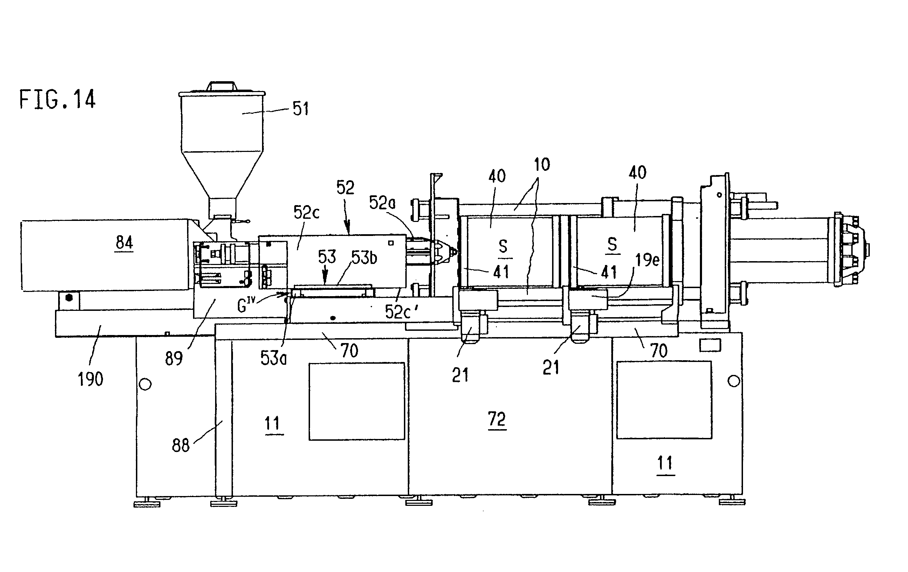

Die Gießformwechseleinrichtung ist dazu bestimmt, an einer Gruppe von räumlich zusammengefaßten Kunststoff-Spritzgießmaschinen (Spritzgießmaschinen) einen computergesteuerten Gießformwechsel durchzuführen, der alle Transportbewegungen einschließlich derjenigen zum und vom Depot der Spritzgießformen umfaßt. Das Ausführungsbeispiel der Fig. 1 zeigt in Verbindung mit den Schematas gemäß den Fign. 7-10 die Gießformwechselvorrichtung ohne Einrichtungen für einen Wechsel der Plastifiziereinheiten. In den übrigen Figuren ist verdeutlicht, wie die für den Gießformwechsel verwendeten Transport- und Depoteinrichtungen zugleich für einen Wechsel der Plastifiziereinheiten nutzbar sind. Da der Wechsel der Plastifiziereinheiten keinerlei Änderungen an der eigentlichen Gießformwechseleinrichtung, sondern lediglich zusätzliche Mittel voraussetzt, wird im folgenden die Gießformwechseleinrichtung mit ihren zusätzlichen Mitteln zum Wechsel der Plastifiziereinheiten als eine bauliche und funktionelle Einheit beschrieben, wobei zunächst die wesentlichen Merkmale der Gießformwechseleinrichtung genannt werden: Die in der Gruppe zusammengefaßten Spritzgießmaschinen sind wie üblich aufgebaut: Auf einem quaderförmigen Maschinenfuß 11 sind eine Formschließeinheit und eine horizontale Spritzgießeinheit angeordnet. Die Spritzgießeinheit ist mit Hilfe eines auf einem Podest 190 des Maschinenfußes 11 abgestützten Antriebsteils 84 (Fig. 14) auf eine im Formspannraum F der Formschließeinheit einspannbare Spritzgießform S hydraulisch in eine Absetzposition absetzbar, in welcher die Düse der Plastifiziereinheit 52 der Spritzgießeinheit von der Spritzgießform S thermisch getrennt ist. Die einen Plastifizierzylinder 52a und die Förderschnecke 56 umfassende Plastifiziereinheit 52 ist nach Programm von der Spritzgießeinheit abkuppelbar. Der bewegbare Formträger 28 der Formschließeinheit ist an Säulen 10 (Fig. 2) geführt und auf Führungsschienen 11a des Maschinenfußes abgestützt, auf welchen Führungsschienen 11a auch der stationäre Formträger 12 mit Versteifungsschild 12b (Fig. 4) über Auflageorgane 12a ruht. Die Antriebseinrichtung für den bewegbaren Formträger 28 ist durch stationäre Schutzabdeckungen 17', der Formspannraum durch verschiebbare Schutzabdeckungen 17 abschirmbar (Fig. 4,11). Die Spritzgießmaschinen der Gruppe mit Vorratsbehältern 51 sind beidseits entlang einer aus zwei Schienen bestehenden linearen Führung 45 derart angeordnet, daß ihre Rückseiten z bei abgewandten Bedienungsseiten y dieser Führung 45 zugewandt sind und ihre Spritzachsen x-x parallel oder (im Falle gleicher Spritzgießmaschinen) koaxial zueinander liegen. Jede Spritzgießmaschine der Gruppe ist rückseitig mit einem bekannten (DE-PS 32 42 169) Gießformwechseltisch 19 versehen, der Gießformführungen G' für zwei Gießformstellplätze A,B (Fig. 2) aufweist. Die Wechseltische 19 sind derart parallel zu den Spritzachsen x-x etwa um eine Gießformtiefe derart verfahrbar, daß die Gießformführungen G' wechselweise mit einer Gießformführung G im Formspannraum F eine quer zur Spritzachse verlaufende Transportbann G',G bilden. Auf dieser Transportbahn ist eine Spritzgießform S mittels einer Gießformverschiebevorrichtung vom Formspannraum F auf den Wechseltisch 19 und umgekehrt verschiebbar. Die Gießformwechseleinrichtung umfaßt ein Depot 44 mit einer Anzahl von Depotstellplätzen 44a sowie ein Transportfahrzeug 27 für den Transport der Spritzgießformen S bzw. von Transporteinheiten E zwischen den Wechseltischen 19 bzw. Verlängerungsabschnitten 19' dieser Wechseltische 19 und den Depotstellplätzen 44a. Diese Depotstellplätze 44a weisen je eine quer zu den parallelen Spritzachsen x-x verlaufende Gießformführung G''' auf. Jedes Transportfahrzeug 27 ist mit einer Gießformführung G'' und einer Gießformverschiebevorrichtung (Transportkette 20) versehen und wechselweise in Anschlußposition verfahrbar, in welchen eine höhenverstellbare Gießformführung G'' mit einer der beiden Gießformführungen (G') mit einer Gießformführung G''' eines Depotstellplatzes 44a oder mit einer Gießformführung G$^{IV}$ eines Verlängerungsabschnittes 19' des Wechseltisches 19 eine Transportbahn bildet.

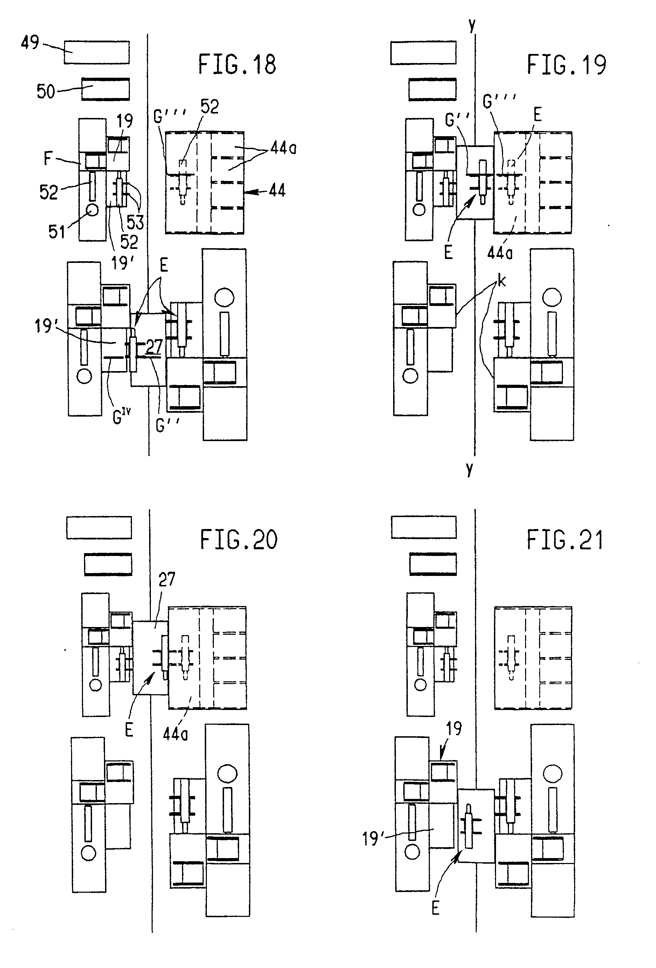

Die durch die Gießformführung G'' des Transportfahrzeuges 27 und die Gießformführung G $^{IV}$ des Verlängerungsabschnittes 19' gebildete Transportbahn dient zur Überführung von Plastifiziereinheiten vom Verlängerungsabschnit 19' des Wechseltisches 19 auf das Transportfahrzeug und umgekehrt. Die Spritzgießmaschinen der Gruppe sind mit bezug auf die transporttischseitigen Längskanten k (Fig. 9,19) ihrer Wechseltische 19 in gleichem Abstand von der Symmetrieachse y-y der Führung 45 angeordnet.

Im folgenden werden die Funktionseinheiten der Wechselvorrichtung im einzelnen beschrieben:

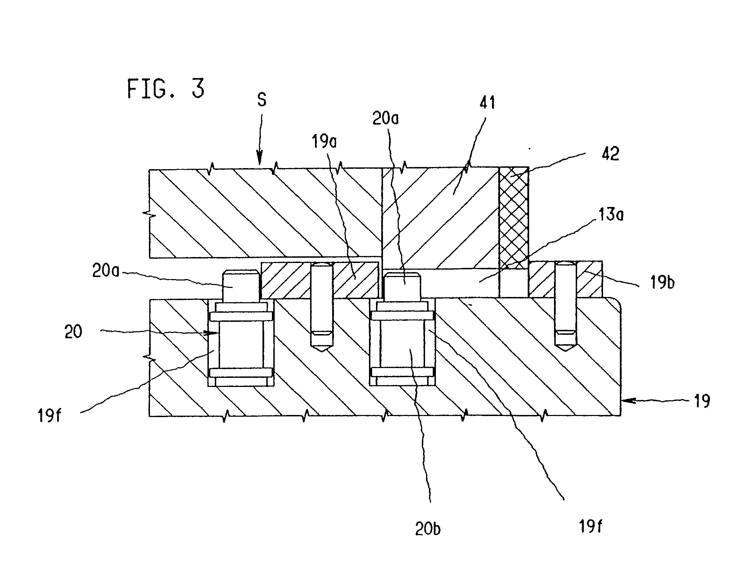

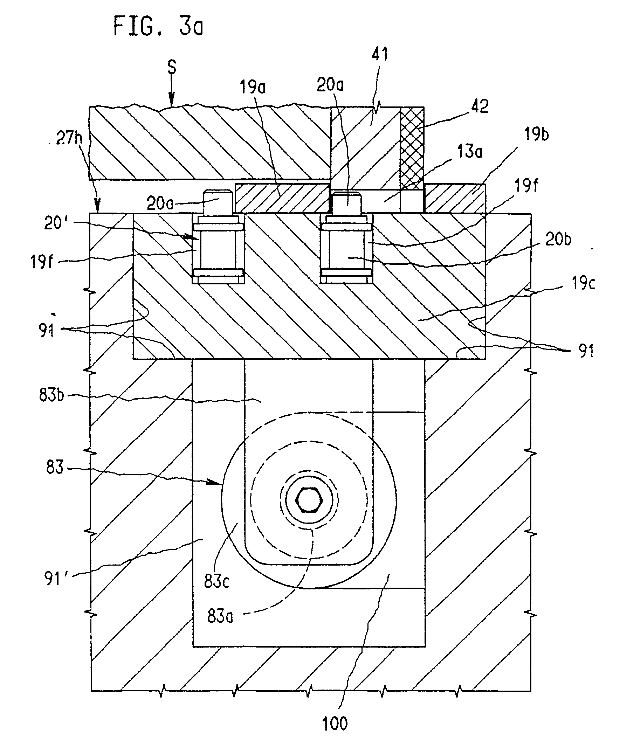

Für die Stellplätze A und B jedes Wechseltisches sind zwei eine Längsseite überragende, identische endlose Transportketten 20 vorgesehen, die quer sowie etwa symmetrisch beidseits der Symmetrieebene s-s (Fig. 2) des Wechseltisches 19 verlaufen. Die Achsen der Umlenkräder 26 der Transportketten 20 verlaufen vertikal und sind mit den Trummen dieser Transportketten 20 in Nuten 19f derart versenkt, daß durch Gelenkbolzen 20b gebildeten Mitnehmer 20a die Oberfläche der Wechseltische 19 nach oben überragen (Fig. 3). Die Transportketten 20 begrenzen die beiden Stellplätze A und B (Fig. 2) je auf der gleichen Seite. Die Umlenkräder 26 liegen außerhalb der Grundfläche des Wechseltisches 19. An dem vom Formspannraum F abgewandten Ende jeder Transportkette 20 des Wechseltisches 19 ist in einem Aufnahmeteil 19e der zum Umlenkrad 26 koaxiale Antriebsmotor 21 für die betreffende Transportkette 20 angeordnet (Fig. 1,2,4). Der zeitgerechte Antrieb der Transportketten 20 ist durch Steuerelemente steuerbar, die an diesen befestigt sind und über Steuerlappen mit Stop-Schaltern des Wechseltisches 19 zusammenwirken. Das ziehende bzw. schiebende Trumm jeder Transportkette 20 verläuft zwischen den die Führung G' bildenden Führungsleisten 19a,19b und entlang der Unterkante der Anlageplatte 41 der zu transportierenden Spritzgießform S.

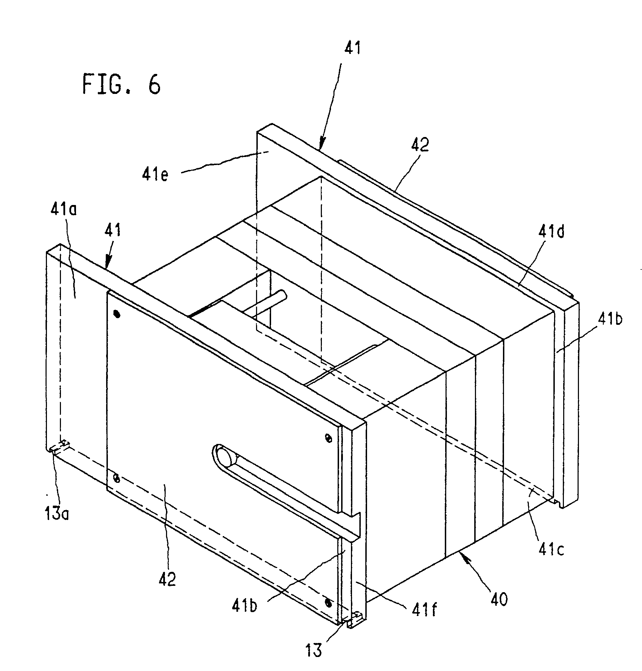

Die Spritzgießformen S, die von unterschiedlicher Größe sein können, umfassen je einen aus genormten Platten zusammengesetzten quaderförmigen Gießformkörper 40 und zwei diesen Gießformkörper 40 begrenzende Anlageplatten 41, mit standardisierten Kupplungsorganen (Quernuten 13,13a). Die Anlageplatten 41 sind mit Hilfe von Zentrierbolzen am Gießformkörper befestigt und insoweit integrierende Bestandteile desselben. Die spannseitig je mit einer Isolierplatte 42 armierten Anlageplatten 41 überragen den Gießformkörper 40 auf allen Seiten (Fig. 6). Der den Gießformkörper 40 nach unten überragende Führungsbereich 41c dient der Führung der Spritzgießform mindestens in den Gießformführungen G',G'' von Wechseltisch und Transportfahrzeug. Beide Anlageplatten 41 sind im Führungsbereich 41c mit zwei in Schließrichtung der Formschließeinheit verlaufenden Quernuten 13,13a von rechteckigem Querschnitt versehen. Die vertikalen Achsen der dem Formspannraum F zugewandten Umlenkräder 26 der Transportketten 20 des Wechseltisches 19 und die hinteren Ouernuten 13a der im Formspannraum F befindlichen Spritzgießform S liegen in einer gemeinsamen, parallel zur Schließrichtung liegenden Ebene b-b, wie aus Fig. 2 ersichtlich. Der den Gießformkörper 40 weit nach hinten überragende Bereich 41a der Anlageplatten 41 bringt die im Bereich der vertikalen Stirnkante 41e angeordnete Quernut 13a einer im Formspannraum F in Arbeitsposition befindlichen Spritzgießform S derart in den Bereich des Mitnehmers 20a der Transportkette 20 des Wechseltisches 19, daß dieser Mitnehmer 20a bei Bewegung der Transportkette 20 im Gefolge seiner Bewegung auf dem Radius des zugehörigen Umlenkrades 26 in die bzw. aus der Ouernut 13a gelangen kann. Die Führungsbereiche 41c dienen zugleich auch im Zusammenwirken mit den den Gießformkörper 40 nach oben überragenden Spannbereichen 41d dem Festspannen der Gießformhälften auf den Formträgern 12,28 mittels Spannbolzen 15, die von hydraulischen Zylindern 14 steuerbar sind. Die Spannbolzen 15 hintergreifen die Anlageplatten 41 im Führungsbereich 41c und im Spannbereich 41d mittels Spannasen, wie insbesondere aus den Figuren 2,4 deutlich wird. Auch die vorderen Quernuten 13 befinden sich in unmittelbarer Nähe der vertikalen Stirnkanten 41f ihrer Anlageplatten 41.

Das Transportfahrzeug 27 ist wie folgt ausgebildet (Fig. 1,2,4,17): In einem Fuß 27e sind zwei vertikale Säulen 27f symmetrisch zur Transportachse y-y (Fig. 9,19) verankert. In Führungen 27f' dieser Säulen 27f ist ein Schlitten vertikal führbar und arretierbar. Der Schlitten umfaßt eine horizontale Lagerplatte 27c und vertikale Führungsschenkel 27c', die in den Führungen 27f' gleitbar gelagert sind. Auf der Lagerplatte 27c ist eine Drehscheibe 27b um 180° drehbar angeordnet. Als Drehantrieb ist ein Motor bei vertikal angeordneter Antriebswelle 27d in der Lagerplatte 27c versenkt. Ein Ritzel 27d' der Antriebswelle 27d kämmt mit einem Zahnkranz am Umfang der Drehscheibe 27b. Symmetrisch zur Transportachse y-y ist außerdem an einer der Säulen 27f eine Stellfläche 59 für den Abtransport von Sammelbehältern 48 für die beim Spritzbetrieb erzeugten und auf Förderbändern 46,47 transportierten Spritzlinge angeordnet. Von einer Trägelatte 27h ist die lineare Gießformführung G'' sowie als Gießformverschiebevorrichtung die Transportkette 20' aufgenommen.

Diese ist, wie insbesondere aus den Fig. 3a,4, 5, 5a, 5b ersichtlich, mit ihrem Antriebsmotor 21 und ihren Umlenkrädern 26 von einer Verschiebeleiste 19c aufgenommen. Diese Verschiebeleiste 19c ist in einem Führungslager 91 der Trägerplatte 27h in Transportrichtung der Transportkette 20' begrenzt verschiebbar gelagert. Dabei sitzt die Trägelatte 27h fest auf der Drehscheibe 27b des Transporttisches 27 auf (Fig. 1, 2, 4, 5, 17). Die Führungsleisten 19a, 19b, die auf der Oberfläche der Verschiebeleiste 19c befestigt sind, bilden eine Gleitführung für die Anlageplatte 41 der Spritzgießform S. In einem Hohlraum 91' der Trägerplatte 47h (Fig. 3a) ist ein Hydraulikzylinder 83 angeordnet, dessen eigentlicher Zylinder 83c über ein Befestigungsstück 100 mit der Trägerplatte 27h verbunden ist und dessen Kolbenstange 83a über ein Verbindungsstück 83b an der Verschiebeleiste 19c zur Verschiebung angreift.

Dadurch kann das Transportfahrzeug 27 ohne Behinderung durch die benachbarten Wechseltische in ihre jeweiligen Anschlußpositionen zur Verwirklichung der Transportbannen G'',G';G'',G''';G'',G$^{IV}$ gefahren und nach Erreichen dieser Anschlußpositionen die erforderliche Kupplungsbereitschaft der Kupplungsorgane dieser Kettenverschiebevorrichtung des Transportfahrzeuges 27 hergestellt werden.

Vor der Bereitschaftsverschiebung, also bei in Ruheposition befindlicher Transportkette 20 der Gießformverschiebevorrichtungkann nämlich das Transportfahrzeug 27 an den Wechseltischen entlangfahren, ohne mit den Transportketten 20 diese Wechseltische 19 zu kollidieren, welche im Bereich ihrer transportfahrzeugseitigen Umlenkräder 26 die Grundfläche der Wechseltische 19 überragen. Nach vollzogener Bereitschaftsverschiebung in der Anschlußposition kann der Mitnehmer 20a, der nunmehr in Kupplungsbereitschaft befindlichen Transportkette 20 des Transportfahrzeuges 27 in die benachbarte Quernut 13a einer auf dem Wechseltisch 19 abgestellten Spritzgießform oder einer dort abgestellten Transporteinheit E oder einer im Depot abgestellten Spritzgießform bzw. Transporteinheit für ein Herüberziehen der genannten Einheiten auf das Transportfahrzeug 27 seitlich eingesteuert werden.

Soll eine auf dem Transportfahrzeug 27 abgestellte und dadurch an die Transportkette 20 der Gießformverschiebevorrichtung angekuppelte Spritzgießform auf dem benachbarten Wechseltisch 19 verschoben werden, so wird diese Spritzgießeinheit durch die Bereitschaftsverschiebung in eine Kupplungs-Bereitschaftsposition überführt, in welcher der Mitnehmer 20a der benachbarten Transportkette des Wechseltisches 19 in die Quernut 13 dieser Spritzgießform einsteuerbar ist.

Die Bereitschaftsverschiebung ist des weiteren Voraussetzung dafür, daß eine auf dem Transportfahrzeug abgestellte Spritzgießform S bzw. Transporteinheit E auf der Transportbahn T' eine lagegerechte Position auf dem Depotstellplatz 44a erreicht, indem durch die Bereitschaftsverschiebung gewissermaßen der Startpunkt für die genannten Einheiten auf dem Transportfahrzeug 27 vorverlegt werden kann. Das gleiche gilt sinngemäß für die Überführung einer Transporteinheit E vom Transportfahrzeug auf den Verlängerungsabschnitt 19e des Wechseltisches 19 beim Wechsel der Plastifiziereinheit.

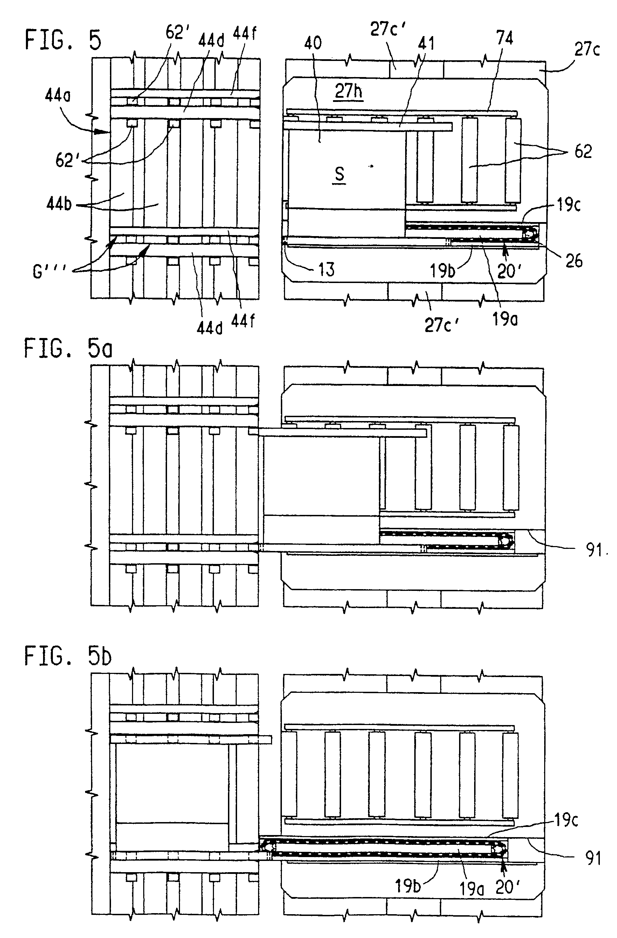

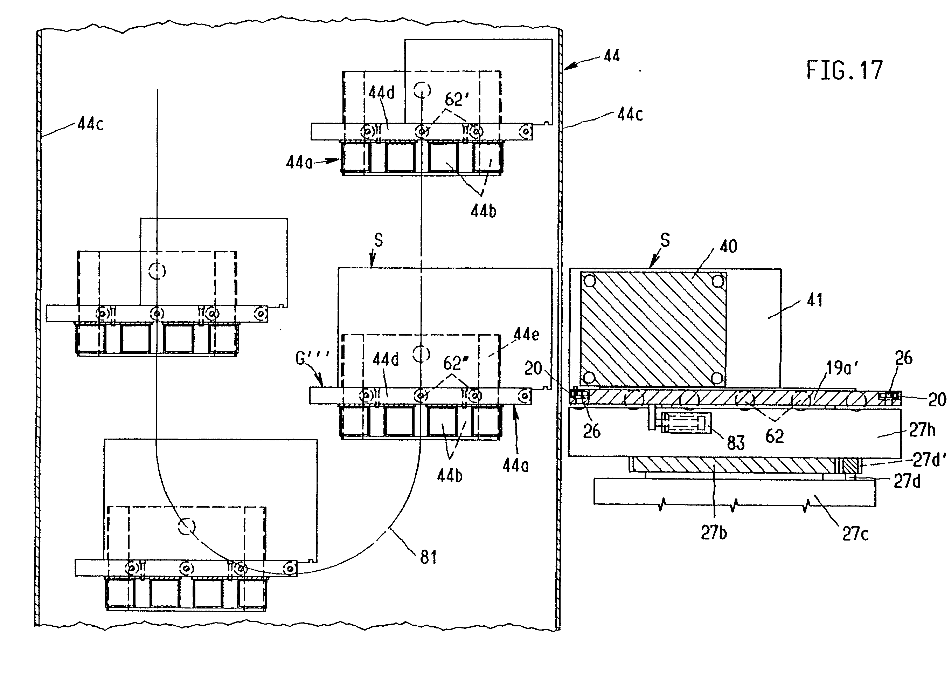

Das Depot für die Spritzgießformen S und die Plastifiziereinheiten 52 enthaltenden Transporteinheiten E ist als Schrank mit Wandungen 44c ausgebildet, der in Höhe der Gießformführungen G'' des Transportfahrzeuges 27 eine Eingabe- bzw. Entnahmeöffnung aufweist. In diesem Schrank sind die Depotstellplätze 44a nach dem Paternoster-Prinzip geführt, wie insbesondere aus Fig. 17 ersichtlich. Somit sind die Depotstellplätze 44a auf eine Eingabe- bzw. Entnahmehöhe steuerbar, die etwa der mittleren Höhe aller Wechseltische 19 der Gruppe entspricht. Wie in den Fig. 5,5a,5b und 17 zeichnerisch dargestellt, sind die Depotstellplätze 44a im wesentlichen aus den Stützrollen 62 gebildet, die in seitlichen, in Transportrichtung angeordneten Lagerleisten 44d drehbar abgestützt sind. Diese Lagerleisten 44d sind Bestandteil einer auf der Bewegungslinie 81 (Fig. 17) führbaren, eine Gondel bildenden Skelettkonstruktion. Letztere umfaßt horizontale Trägerbalken 44b, welche sich über die ganze Breite des Schrankes erstrecken, und vertikale Skelettelemente 44e. Wie aus der Fig. 5b in Verbindung mit Fig.17 erkennbar, wird die Spritzgießform S bzw. die Arbeitseinheit E beim Einfahren bzw. Ausfahren in den bzw. aus dem Depotstellplatz 44a an Führungsleisten 44f geführt, welche in Verbindung mit den Lagerleisten 44d die Gießformführung G''' des Depotstellplatzes 44a bilden. Auf die Horizontalführung der die Depotstellplätze 44a enthaltenden Gondeln auf der Bann 81 (Fig.17) im Paternoster-Prinzip braucht nicht näher eingegangen zu werden, da es sich bei dieser um eine bekannte Technik handelt (DE-ASen 1,654,737; 27 36 315; 24 10 484).

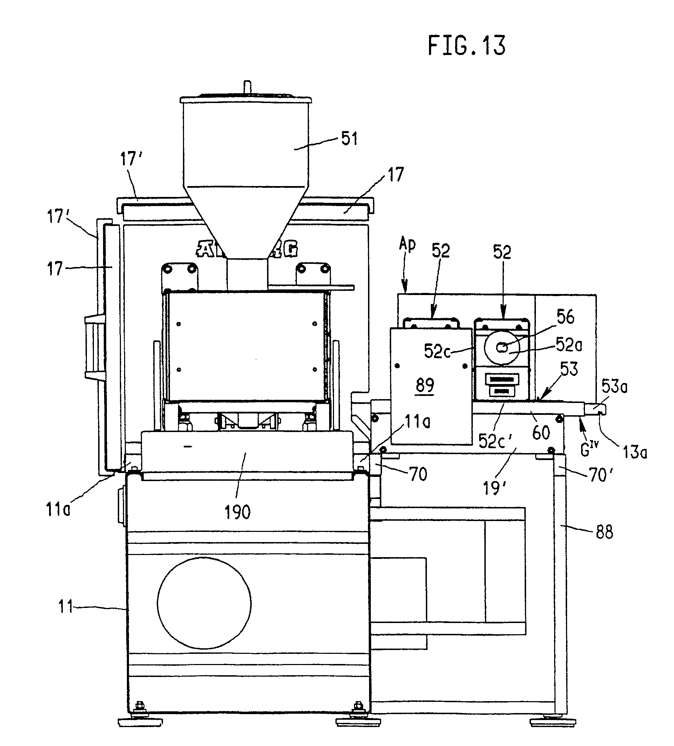

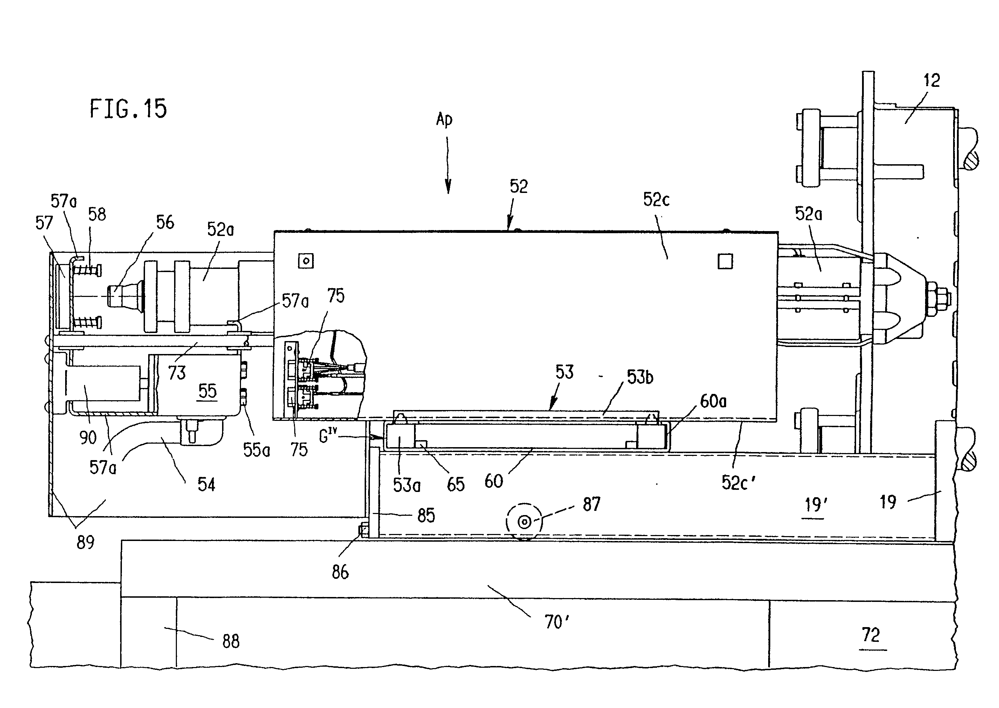

Nachstehend wird auf die den computergesteuerten Wechsel der Plastifiziereinheiten 52 ermöglichenden Verlängerungsabschnitte 19' der Wechseltische 19 eingegangen, welche Verlängerungsabschnitte 19' selbstverständlich auch als gesonderte Abschnitte ausgebildet sein können: Jeder Verlängerungsabschnitt 19' ist durch ein Blechprofil gebildet, das mittels Zuganker 86 mit dem Wechseltisch 19 verbunden ist. Die Zuganker 86 sind an einer stirnseitigen Spannplatte 85 abgestützt (Fig. 15). Der auf diese Weise verlängerte Wechseltisch 19 ist mitsamt seines Verlängerungsabschnittes 19' mittels Laufrollen 87 auf Laufschienen 70,70' motorisch verfahrbar. Die eine Laufschiene 70 ist an der benachbarten Führungsschiene 11a des Maschinenfußes 11 befestigt, während die andere Laufschiene 70' auf einem Stützfuß 88 sowie einer ebenfalls durch ein Blechprofil gebildeten Wandung 72 abgestützt ist (Fig. 11-16). Die quer zu den Spritzachsen x-x verlaufende Gießformführung G$^{IV}$ des Verlängerungsabschnittes 19' ist, wie insbesondere aus den Figuren 11,12,15 und 16 erkennbar, durch ein U-förmiges Blechprofil mit beidseitigen, zweifach umgebördelten Rändern 60a gebildet. Das Blechprofil ist mittels Befestigungselementen 65 mit dem Verlängerungsabschnitt 19' verbunden. Eine in der Gießformführung G$^{IV}$ führbare Palette 53 ist aus zwei den unteren Führungsbereichen 41c der Anlageplatten 41 an der Spritzgießform S nach Lage und Abmessung entsprechende Anlageplattenfragmente 53a und durch eine Lagerplatte 53b zusammengesetzt, welche die Anlageplattenfragmente 53a miteinander verbindet. Die Anlageplattenfragmente 53a sind entsprechend den Anlageplatten 41 mit Quernuten 13,13a versehen.

Bei Verschiebung der Palette gleiten die Anlageplattenfragmente 53a in den eingebördelten Rändern 60a des Blechprofils 60.

Die je von einem Viereckrohr 52c mit horizontaler Stellfläche 52c' umschlossene Plastifiziereinheit 52 ist aus ihrer Absetzposition in der Spritzgießmaschine durch an sich bekannte Führungs- und Rangiermittel in einer durch Führungen der Spritzgießmaschine festgelegten Bahn anhebbar und auf die von der Gießformführung G$^{IV}$ aufgenommene Palette 53 zur Bildung der Transporteinheit E vertikal absenkbar. Beim Absenken tauchen Zentrierzapfen 53c der Lagerplatte 53b in entsprechende Zentrierlöcher der Stellfläche 52c' zentrierend ein. Die auf diese Weise auf der Palette 53 und der Plastifiziereinheit 52 gebildete Transporteinheit E kann dank der Anlageplattenfragmente 53a auf dem Transportfahrzeug 27 genauso transportiert werden und auf einem Depotstellplatz 44a genauso abgestellt werden wie eine Spritzgießform S. Dies gilt auch für die Verschiebung der Transporteinheit E auf der durch die Gießformführung G'' und des Transportfahrzeuges 27 und die Gießformführung G$^{IV}$ des Verlängerungsabschnittes 19' gebildeten Transportbahn mit Hilfe der Transportkette 20' des Transportfahrzeuges 27.

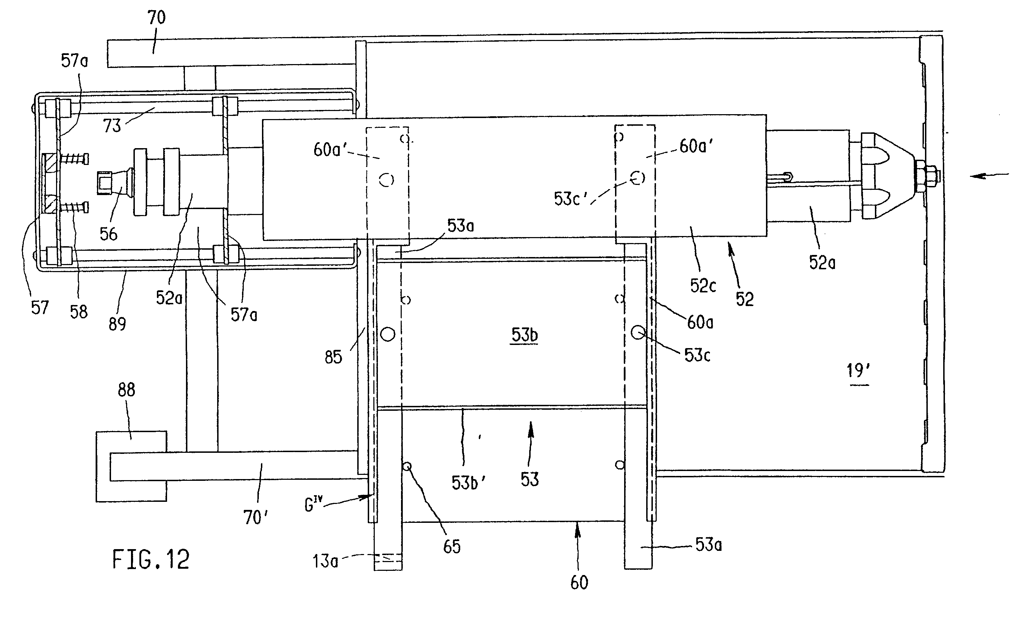

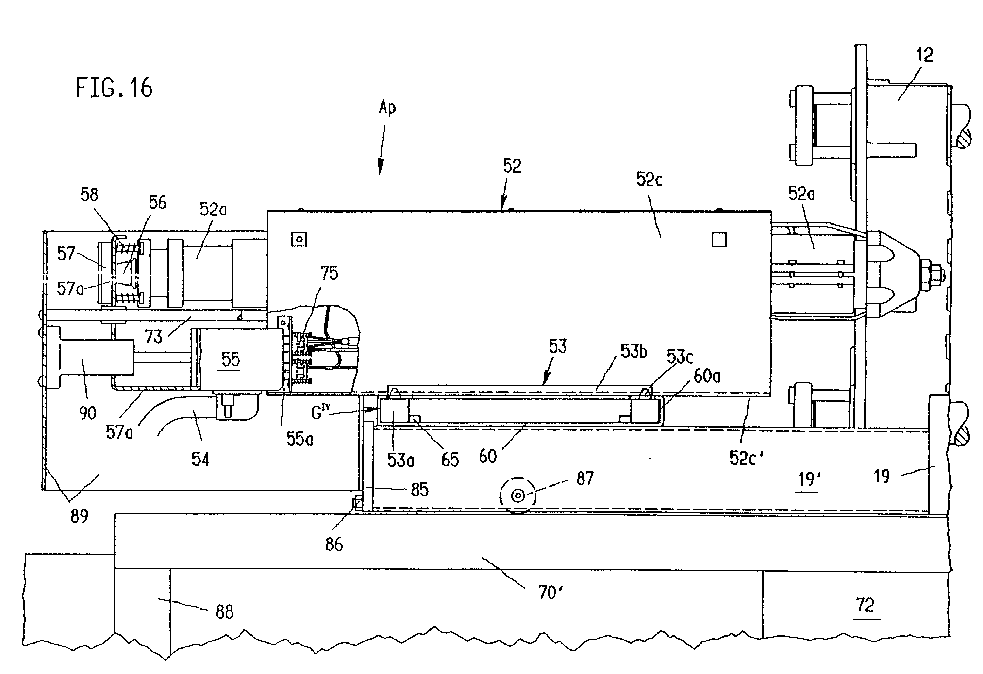

Die der benachbarten Spritzachse x-x zugewandte Hälfte des Verlängerungsabschnittes 19' ist als Adaptionsplatz Ap für eine Plastifiziereinheit 52 ausgebildet. Die Plastifiziereinheit 52 ist aus ihrer Absetzposition in der Spritzgießmaschine nach Programm wahlweise über den Adaptionsplatz Ap oder über die in der Gießformführung G aufgenommene Palette 52 verfahrbar und dort je zentrierend in einer axialen Position absetzbar, welche etwa der axialen Lage ihrer Absetzposition in der Spritzgießmaschine entspricht. Wie insbesondere aus Fig. 12 erkennbar ist, erstreckt sich das die Gießformführung G$^{IV}$ bildende Blechprofil 60 nahezu über den ganzen Adaptionsplatz Ap, wobei der obere horizontale, die Anlageplattenfragmente 53a übergreifende Abschnitt des zweifach umgebördelten Randes 60a im Abschnitt 60a' des Adaptionsplatzes Ap um das Mehrfache verbreitert ist. Auf diesen verbreiterten horizontalen Abschnitten 60a' des zweifach umgebördelten Randes 60a ruht die auf dem Adaptionsplatz Ap befindliche Plastifiziereinheit 52. Sie ist in Adaptionsposition mit Hilfe von Zentrierzapfen 53c' dieses verbreiterten Abschnittes 60a' zentriert, welche in entsprechende Zentrierlöcher der Stellfläche 52c' des Viereckrohres 52c des Plastifizierzylinders 53 zentrierend eintauchen. Wie ebenfalls aus Fig. 12 erkennbar, erstrecken sich auch die Anlageplattenfragmente 53a der Palette 53, die innerhalb des umgebördelten Randes 60a geführt sind, über den Abschnitt 60a', also weitgehend über den Adaptionsplatz Ap hinweg. Insbesondere in den Fign. 15,16 ist gezeigt, daß jeder Adaptionsplatz Ap mit einem am Verlängerungsabschnitt 19' abgestützten, horizontalen Hydraulikzylinder 90 versehen ist. Dieser Hydraulikzylinder ist rückseitig an einem U-förmigen Blechrahmen 89 befestigt, der starr mit dem Verlängerungsabschnitt 19' des Wechseltisches 19 in Verbindung steht. Mit Hilfe des Hydraulikzylinders 90 ist ein Kupplungsteil 55 entgegen der Wirkung von Federn 58 in Kupplungsposition und umgekehrt überführbar, in welcher Stecker 55a des Kupplungsteiles in federnd angeordneten Buchsen 75 der Plastifiziereinheit 52 kontaktierend aufgenommen sind. Im Kupplungsteil 55 sind die Anschlußenden 54 von Versorgungsleitungen für die Plastifiziereinheit 52 zusammengefaßt. Eine Anlageplatte 57 ist über ein Trägerelement 57a mit dem Kupplungsteil 55 starr verbunden, welches Trägerelement durch ein im Querschnitt der Figuren 15 und 16 U-förmig gebogenes Blech gebildet ist. Zur Stabilisierung sind vertikale Schenkel des Bleches in Führungsstangen 73 geführt. Die als Schraubenfedern ausgebildeten Federn 58 sind auf Trägerbolzen angeordnet, die relativ zur Anlageplatte 57 beim Auftreffen der Trägerbolzen auf den Plastifizierzylinder 52a axial bewegbar sind. Befindet sich das Kupplungsteil 55 in Kupplungsposition, so liegt demzufolge die Platte 55a am freien rückwärtigen Ende der Förderschnecke 56 unter Pufferung durch die vorgespannten Federn 58 an. Durch die genannte Anlage wird erreicht, daß die Förderschnecke 56 im Plastifizierzylinder 52a bei einer im Rahmen der Adaption erfolgenden Vorwärmung und einer damit verbundenen Ausdehnung des im Plastifizierzylinder befindlichen thermoplastischen Materials im wesentlichen in ihrer axialen Stellung verbleibt und dadurch ein rückwärtiger Austritt dieses Kunststoffmaterials vermieden wird.

Wie aus den Schematas gemäß den Figuren 7 bis 10 bzw.

18 bis 21 ersichtlich, ist die Gießformwechseleinrichtung arbeitsfähig unabhängig davon, ob sich größere oder kleinere oder gleichgroße Spritzgießmaschinen in der Gruppe befinden. Handelt es sich um gleichgroße Spritzgießmaschinen, so liegen die Spritzachsen x-x sowohl der auf der einen Seite der Führung 45 angeordneten Spritzgießmaschinen als auch die Spritzachsen der auf der anderen Seite angeordneten Spritzgießmaschinen koaxial zueinander. Unterschiedlich große Spritzgießmaschinen sind in unterschiedlichen Abständen zur Transportachse y-y des Transportfahrzeuges 27 angeordnet, und zwar derart , daß die transportfahrzeugseitigen Längskanten k der Wechseltische dieser unterschiedlich großen Spritzgießmaschinen etwa den gleichen Abstand zur genannten Transportachse y-y haben. Noch konkreter gesprochen:

Entscheidend für die Arbeitsfähigkeit ist, daß die transportfahrzeugseitigen Kupplungsorgane (Quernuten 13a) der lagerecht auf den Stellplätzen A, B der Wechseltische 19 abgestellten Spritzgießformen S sich in gleichem Abstand von der Transportachse y-y befinden. Das gleiche gilt mit Bezug auf die transportfahrzeugseitigen Quernuten 13a der Anlageplattenfragmente 53a der auf dem Verlängerungsabschnitt 19' des Wechseltisches 19 lagerecht in der Gießformführung G$^{IV}$ aufgenommen und eine Plastifiziereinheit 52 tragenden Palette 53. Das gleiche gilt aber auch für die genannten Quernuten der auf einem der Führung 45 zugewandten Gießformstellplatz 44a abgestellten Spritzgießform bzw. der dort abgestellten, mit der Plastifiziereinheit 52 eine Transporteinheit E bildenden Palette 53. Sind diese Voraussetzungen erfüllt, so können auf den kleineren Wechseltischen 19 kleinerer Spritzgießmaschinen auch kürzere Transportketten 20 angeordnet sein, ohne daß der Betrieb der Gießformwechseleinrichtung beeinträchtigt wäre, sofern die Spritzgießform bzw. die Transporteinheit auf einer der Transportbahnen unter Kupplungseingriff nur eines einzigen Mitnehmers 20a der transportierenden Kette 20 gekuppelt ist. Aus dem Schema der Fig. 7 ergibt sich die Position des Wechseltisches 19, in welcher eine Spritzgießform S vom Wechseltisch 19 auf das Transportfahrzeug 27 über die Gießformführung G',G" übernommen wird, nachdem der Wechseltisch * um eine Gießformtiefe verfahren ist. In dieser Position des Wechseltisches wird auch die adaptierte Spritzgießform S' vom Wechseltisch 19 in den Formspannraum verfahren, was gemäß dem Schema der Fig. 7 bereits geschehen ist.

Im Schema der Fig.8 ist das Transportfahrzeug 27 in Anschlußposition zur Übergabe der ausgewechselten Spritzgießform auf der durch die Gießformführung G" und G''' gebildeten Transportbann auf einen Depotstellplatz 44a verfahren. Die Übergabe ist noch nicht erfolgt. Im Schema der Fig. 9 ist die auszuwechselnde Spritzgießform in den benachbarten Depotstellplatz 44a eingefahren. Das Transportfahrzeug 27 ist in eine Anschlußposition zur Übernahme einer Spritzgießform aus einem Depotstellplatz 44a verfahren. Im Schema befindet sich die überzunehmende Spritzgießform S gerade in Transportbewegung. Im Schema der Fig. 10 ist eine Spritzgießform S von dem in Anschlußposition gefahrenen Transportfahrzeug 27 bereits auf einen zur Adaption bestimmten Stellplatz des Wechseltisches 19 überführt worden und wird dort adaptiert. Die im Formspannraum F befindliche auszu wechselnde Spritzgießform S ist zur Überführung auf den Wechseltisch 19 bereit.

Im Schema der Fig. 18 wird gerade eine Trans-

* mit dieser zuvor aus dem Formspannraum    F übernommenen    Spritzgießform    S

porteinheit E auf einer linearen, aus den Gießformführungen G'',G$^{IV}$ gebildeten Transportbahn T''
vom Verlängerungsabschnitt 19' auf das Transportfahrzeug 27 überführt. Im Schema der Fig. 19
befindet sich das Transportfahrzeug 27 in Anschlußposition zur Verwirklichung einer Transportbahn G'';G'''. Die Transporteinheit ist zur Überführung auf einen Depotstellplatz 44a bereit. Die Position der überführten Transporteinheit auf dem Depotstellplatz 44a ist durch gestrichelte Linienführung angedeutet.

Im Schema der Fig. 20 wird gerade eine Transporteinheit aus einem anderen Depotstellplatz 44a
auf das Transportfahrzeug 27 überführt.

Im Schema der Fig. 21 befindet sich das
Transportfahrzeug 27 in Anschlußposition zur Übergabe der auf ihm abgestellten, aus Palette 53 und
Plastifiziereinheit 52 bestehenden Transporteinheit
E auf den Verlängerungsabschnitt 19' des Wechseltisches 19 der (in Fig. 21 links angeordneten)
Spritzgießmaschine. Im zeichnerisch dargestellten
Ausführungsbeispiel ist die Gießformführung G im
Formspannraum F durch Stützelemente 18 beider
Formträger 12,28 und durch die Aufspannflächen
dieser beiden Formträger 12,28 gebildet. Auf dem
Wechseltisch 19 ist die Gießformführung, wie insbesondere aus Fig. 2 ersichtlich, durch eine zwischen den beiden Trummen einer Transportkette
20 angeordneten Führungsleiste 19a und aus einer
Führungsleiste 19b gebildet, die sich im Abstand
von der Führungsleiste 19a befindet, welcher der
Dicke einer Anlageplatte 41 entspricht. Die Gießformführung
G'' des Transportfahrzeuges 27 ist durch Führungsleisten 19a,19b gebildet. Diese sind Bestandteil der hydraulisch begrenzt axial verschieblichen
Gießformverschiebevorrichtung, welche durch die
Bereitschaftsverschiebung mit oder ohne angekuppelte Spritzgießform S bzw. Transporteinheit E in
Kupplungsbereitschaft verschiebbar ist. Die Gießformführung G''' auf den Depotstellplätzen 44a ist
durch die Stützrollen 62', die Führungsleisten 44f
und Lagerleisten 44a gebildet.

Gießformführung G$^{IV}$ auf dem Verlängerungsabschnitt 19' ist durch die umgebördelten Ränder
60a eines Blechprofils gebildet. Zur Abstützung der
Spritzgießeinheiten S bzw. der Transporteinheiten
E während des Transportes sind friktionsmindernde
Mittel, insbesondere Stützrollen 62 sowohl auf dem
Transportfahrzeug 27 als auch auf den Wechseltischen 19 vorgesehen.

In den Fign. 5,5a und 5b sind zeitlich aufeinanderfolgende Abschnitte der Überführung einer
Spritzgießform S vom Transportfahrzeug 27 auf
einen Depotstellplatz 44a demonstriert. In Fig.5
befindet sich die Transportkette 20 der Gießformverschiebevorrichtung des Transportfahrzeuges 27,
in welcher das Transportfahrzeug entlang den Wechseltischen 19 in Anschlußposition an den Depotstellplatz 44a gefahren wurde. In Fig. 5a ist die
Bereitschaftsverschiebung gerade beendet, das
heißt die Transportkette 20 ist hydraulisch in Kupplungsbereitschaftsposition verschoben. Im vorliegenden Fall geht es aber bei dieser Verschiebung
nicht um die Herbeiführung der Kupplungsbereitschaft, sondern um eine Vorverlegung des Startpunktes bei der Verschiebung der Spritzgießform
mit Hilfe der Transportkette 20, um sicherzustellen,
daß die Spritzgießform in die erforderliche Endposition auf den Depotstellplatz 44a gelangt, wie aus
Fig. 5b ersichtlich.

Mit 49,50 sind Stationen für den Abtransport
von Spritzgießformen S und Sammelbehältern 48
bezeichnet.

## Patentansprüche

1. Gießformwechseleinrichtung an einer Gruppe
   von Kunststoff-Spritzgießmaschinen, die je eine
   im Formspannraum (F) einer Formschließeinheit einspannbare, mit Leitelementen
   (Anlageplatten 41) versehene Spritzgießform
   (S) und eine von dieser in eine Absetzposition
   absetzbare horizontale Spritzgießeinheit mit
   abkuppelbarer Plastifiziereinheit (52) aufweisen, mit Gießformwechseltischen (19), die je
   an der Rückseite (z) einer Spritzgießmaschine
   angeordnet, mit Gießformführungen (G') für
   zwei Gießformstellplätze (A;B) versehen und
   derart parallel zu den Spritzachsen (x-x) der
   Spritzgießmaschinen verfahrbar sind, daß ihre
   Gießformführungen (G') wechselweise mit einer Gießformführung (G) im Formspannraum
   (F) eine quer zur Spritzachse (x-x) verlaufende
   Transportbahn (G', G) bilden, auf welcher eine
   Spritzgießform (S) mittels einer Gießformverschiebevorrichtung vom Formspannraum (F)
   auf den Wechseltisch (19), und umgekehrt,
   verschiebbar ist, mit einem Gießformdepot (44)
   mit einer Anzahl von Depotstellplätzen (44a),
   sowie einer Transporteinrichtung für den
   Transport der Spritzgießformen (S) zwischen
   den Gießformwechseltischen (19) und den Depotstellplätzen (44a), welche Transporteinrichtung ein mit einer Gießformverschiebevorrichtung und einer Gießformführung (G'') versehenes Transportfahrzeug (27) mit einem um wenigstens 180° drehbaren Stellplatz
   (Trägerplatte 27h) ausgerüstet und in einer parallel zu den Spritzachsen (x-x) verlaufenden
   Führung (45) wechselweise in Anschlußposition
   verfahrbar ist, in welchen eine Gießformführung (G'') des höhenverstellbaren Transportfahrzeuges (27) mit einer der beiden Gießformführungen (G') des Wechseltisches (19) oder
   mit einer Gießformführung (G''') eines Depotstellplatzes (44a) eine Transportbahn (G'',G';G'',G''') bildet, wobei die auf der einen Seite der Führung (45) aufgestellten Kunststoff-Spritzgießmaschinen spiegelsymmetrisch zu denjenigen auf der anderen Seite angeordnet sind, dadurch gekennzeichnet, daß die Plastifiziereinheit (52) zur Bildung einer Transporteinheit (E) auf eine Palette (53) aufsetzbar ist, deren Leitelemente (Anlageplattenfragmente 53a) den Leitelementen (Anlageplatten 41) der Spritzgießform (S) entsprechen und daß Verlängerungsabschnitte (19') der Wechseltische (19) je eine weitere quer zu den Spritzachsen (x-x) verlaufende Gießformführung (G $^{IV}$) aufweisen und das Transportfahrzeug (27) wechselweise in Anschlußposition verfahrbar ist, in welchen die Gießformführung (G'') des Transportfahrzeuges (27) mit dieser Gießformführung (G $^{IV}$) und mit der Gießformführung (G''') eines Depotstellplatzes (44a) Transportbahnen (G'',G $^{IV}$;G'',G''') für die Transporteinheiten (E) bildet.

2.  Gießformwechseleinrichtung nach Patentanspruch 1, dadurch gekennzeichnet, daß die Palette (53) zwei den Anlageplatten (41) einer Spritzgießform (S) entsprechende Anlagenplattenfragmente (53a) aufweist, die durch eine Lagerplatte (53b) miteinander verbunden und mit Kupplungsorganen (Quernuten 13,13a) für den Angriff der Gießformverschiebevorrichtung des Transportfahrzeuges (27) versehen sind.

3.  Gießformwechseleinrichtung nach Patentanspruch 1 oder 2, dadurch gekennzeichnet, daß die Anlageplatten (41) bzw. die Anlageplattenfragmente (53a) wahlweise an den Gießformführungen (G,G',G'',G''', G $^{IV}$) mittels endloser, unterhalb derselben auf dem Wechseltisch (19) und auf dem Transporttisch (27) angeordneter Transportketten (20;20') verschiebbar sind.

4.  Gießformwechseleinrichtung nach einem der vorhergehenden Patentanspruche dadurch gekennzeichnet, daß die je von einem Viereckrohr (52c) mit horizontaler Stellfläche (52c') umschlossene Plastifiziereinheit (52) aus ihrer Absetzposition in der Spritzgießmaschine anhebbar und auf die von der Gießformführung (G $^{IV}$) aufgenommene Palette (53) zur Bildung der Transporteinheit (E) vertikal absenkbar ist, wobei Zentrierzapfen (53c) der Lagerplatte (53b) in Zentrierlöcher der Stellfläche (52c') zentrierend eintauchen.

5.  Gießformwechseleinrichtung nach einem der vorhergehenden Patentansprüche, dadurch gekennzeichnet, daß die Gießformführungen (G',G'') auf Wechseltisch (19) und Transportfahrzeug (27) durch Führungsleisten, die Gießformführung (G) im Formspannraum (F) durch Stützelemente (18) und Aufspannflächen der Formträger (12,28) und die Gießformführung (G $^{IV}$) auf dem Verlängerungsabschnitt (19') durch ein Blechprofil (60) gebildet sind, wobei das ziehende bzw. schiebende Trumm der Transportketten (20,20') entlang der Unterkante einer Anlageplatte (41) bzw. eines Anlageplattenfragmentes (53a) verläuft.

6.  Gießformwechseleinrichtung nach einem der Patentansprüche 4,5 dadurch gekennzeichnet, daß die Gießformführungen (G $^{IV}$ ) für die Transporteinheiten (E) auf den der Führung (45) zugewandten Hälften der Verlängerungsabschnitte (19') angeordnet und die anderen Hälften als Adaptionsplätze (Ap) für die Plastifiziereinheiten (52) ausgebildet sind, welche aus ihren Absetzpositionen in den Spritzgießmaschinen wahlweise über die Adaptionsplätze (Ap) oder über die in den Führungen (G $^{IV}$) führbaren Paletten (53) verfahrbar und dort in einer axialen Position absetzbar sind, welche ihrer axialen Lage in der Absetzposition entspricht.

7.  Gießformwechseleinrichtung nach Patentanspruch 6, dadurch gekennzeichnet, daß im Adaptionsplatz (Ap) eine vertikale Anlageplatte (57) über vorgespannte Federn (28) mit Hilfe eines horizontalen Hydraulikzylinders (6) axial an die Förderschnecke (56) der Plastifiziereinheit (52) anlegbar ist, durch welchen Hydraulikzylinder zugleich die Adaptionsanschlüsse der Versorgungsleitungen (54) für die Plastifiziereinheit (52) steuerbar sind (Fig. 11-16).

8.  Gießformwechseleinrichtung nach einem der vorhergehenden Patentansprüche, dadurch gekennzeichnet, daß in dem den Computer für die Gießformwechselvorrichtung aufnehmenden Fuß (27e) des Transportfahrzeuges (27) symmetrisch zur Symmetrieachse (y-y in Fig. 9,19) der im Boden verlegten Führung (45) zwei vertikale Säulen (27f) verankert sind, daß in Führungen (27f') dieser Säulen ein Schlitten mit einer horizontalen Lagerplatte (27c) vertikal führbar und auf dieser Lagerplatte (27c) eine die Gießformführung (G'') und die Transportkette (20') mittels Trägerplatte (27h in Fig. 4,17) aufnehmenden Scheibe (27b) um 180° drehbar gelagert ist.

9.  Gießformwechseleinrichtung nach einem der vorhergehenden Patentansprüche, dadurch gekennzeichnet, daß die Anlageplatten (41) bzw.

die Anlageplattenfragmente (53a) der auf den Depotstellplätzen (44a) und auf den Wechseltischen (19) der depotseitigen Spritzgießmaschinen abgestellten Spritzgießformen (S) bzw. Transporteinheiten (E) an eine gemeinsame, zur Führung (45) parallele, vertikale Ebene angrenzen, wobei die Anlageplatten (41) bzw. Anlageplattenfragmente (53a) der auf den Depotstellplätzen abgestellten Spritzgießformen (S) bzw. Transporteinheiten (E) diese Depotstellplätze (44a) nach vorne überragen.

10. Gießformwechseleinrichtung nach einem der vorhergehenden Patentansprüche, dadurch gekennzeichnet, daß am Transportfahrzeug (27) symmetrisch zur Symmetrieachse (y-y) der Führung (45) eine Stellfläche (59) für den Abtransport eines Sammelbehälters (48) für die aus den Spritzgießformen (S) ausfallenden und mit einem parallel zur Spritzachse (x-x) verlaufenden Förderband (45) aus dem Maschinenfuß heraustransportierbaren Spritzlinge angeordnet ist.

## Claims

1. A mould-changing apparatus on a group of plastics injection moulding machines each of which has an injection mould (S) which may be clamped in the mould clamping space (F) of a mould closing unit, and provided with guiding engagement plates (41), and further having a horizontal injection moulding unit, which may be deposited in the storage position, with a plasticising unit (52) which may be uncoupled, with mould changing tables (19), each situated on the rear side (z) of an injection moulding machine, provided with mould guides (G') for two mould emplacements (A;B) and movable in such a way parallel to the injection axes (x-x) of the injection moulding machines that their mould guides (G') alternately form, with a mould guide (G) in the mould clamping space (F) a transport track (G',G) extending transversely to the injection axis (x-x), upon which a mould (S) may be moved by means of a mould shifting device from the mould clamping space (F) on to the changing table (19) and conversely, with a mould storage area (44) and a plurality of storage compartments (44a), and with a transport device for transporting the injection moulds (S) between the mould changing tables (19) and the storage compartments (44a), said transport device being a transport carriage (27), equipped with a mould shifting device and a mould guide (G"), and having an emplacement (carrier plate 27h) which is rotatable through at least 180°, and is alternately

movable in a guide (45) extending parallel to the injection axes (x-x) into a coupling position, in which a mould guide (G") of the vertically-shiftable transport carriage (27) forms, with one of the two mould guides (G') of the changing table (19) or with a mould guide (G''') of a storage compartment (44a) a transport track (G", G'; G'''), the plastics injection moulding machines installed on the other side of the guide (45) being arranged in a mirror-symmetrical manner with respect to those on the other side, characterised in that the plasticising unit (52), in order to form a transport unit (E), may be deposited on a pallet (53) whose guide members (clamping plate fragments 53a) correspond to the guide members (clamping plates 41) of the injection mould (s), and that extensions (19') of the changing tables (19) each have a further mould guide (G$^{IV}$) extending transversely to the injection axes (x-x), and the transport carriage (27) is alternately movable into the coupling position in which the mould guide (G") of the transport carriage (27) forms, with this mould guide (G$^{IV}$) and with the mould guide (G''') of a storage compartment (44a), transport tracks (G", G$^{IV}$; G", G''') for the transport units (E).

2. A mould-changing apparatus according to Patent Claim 1, characterised in that the pallet (53) has two clamping plate fragments (53a) corresponding to the clamping plates (41) of an injection mould (S), which are connected together by a support plate (53b), and are provided with coupling members (transverse grooves 13, 13a) for engagement with the mould shifting arrangement of the transport carriage (27).

3. A mould-changing apparatus according to Patent Claim 1 or 2, characterised in that the clamping plates (41) or the clamping plate fragments (53a) are selectively displaceable on the mould guides (G, G', G", G''', G$^{IV}$) by means of endless transport chains (20; 20') situated underneath said mould guides on the changing table (19) and on the transport carriage (27).

4. A mould-changing apparatus according to one of the foregoing Patent Claims, characterised in that the plasticising units (52), each surrounded by a rectangular-section tube (52c) with a horizontal base surface (52c') may be raised out of its emplacement position in the injection moulding machine, and may be lowered vertically on to the pallet (53) received by the mould guide (G$^{IV}$) forming the transport unit (E), centering pins (53c) of the support plate (53b) penetrating in a centering manner into centering holes in the base surface (52c').

5. A mould-changing apparatus according to one of the foregoing Patent Claims, characterised in that the mould guides (G', G'') are formed on the changing table (19) and transport carriage (27) by guide strips, the mould guide (G) in the mould clamping space (F) is formed by support members (18), and the clamping surfaces of the mould carriers (12, 28) and the mould guide (G$^{IV}$) on the extension (19') are formed by a sheet metal section (60), the pulling or pushing flight of the transport chains (20, 20') extending along the lower edge of a clamping plate (41) or of an engagement plate fragment (53a).

6. A mould-changing apparatus according to one of Patent Claims 4 or 5, characterised in that the mould guides (G$^{IV}$) for the transport units (E) are situated on those halves of the extensions (19') oriented towards the guide (45), and the other halves are designed as conditioning emplacements (Ap) for the plasticising units (52), which are selectively movable from their deposited positions in the injection moulding machines across the conditioning emplacements (Ap) or across the pallets (53) guidable in the guides (G$^{IV}$), and may be deposited at that point in an axial position corresponding to their axial configuration in the deposited position.

7. A mould-changing apparatus according to Patent Claim 6, characterised in that in the conditioning emplacement (Ap) a vertical clamping plate (57) may be applied, via biased springs (28), and with the aid of a horizontal hydraulic cylinder (6), axially against the conveyor screw (56) of the plasticising unit (52), the said hydraulic cylinder simultaneously controlling the conditioning connections of the supply conduits (54) for the plasticising unit (52) (Figs. 11-16).

8. A mould-changing apparatus according to one of the foregoing Claims, characterised in that, in the machine bed (27e) of the transport carriage (27) receiving the computer for the mould-changing apparatus,two vertical columns (27f) are anchored symmetrically to the axis of symmetry (y-y in Figs. 9, 19) of the guide (45) set in the base, that a sled with a horizontal support plate (27c) is vertically guidable in guides (27f') of these columns, and, upon this support plate (27c) a disc (27b) receiving the mould guide (G'') and the transport chain (20') by means of a carrier plate (27h in Figs. 4, 17) is rotatable through 180°.

9. A mould-changing apparatus according to one of the foregoing Patent Claims, characterised in that the clamping plates (41) or the clamping plate fragments (53a) of the moulds (S) or transport units (E) deposited in the storage compartments (44a) and on the changing tables (19) of the injection moulding machines on the same side as the storage area, border on a common vertical plane parallel with the guide (45), the clamping plates (41) or clamping plate fragments (53a) of the moulds (S) or transport units (E) deposited in the storage compartments (44a) projecting forwards from said storage compartments (44a).

10. A mould-changing apparatus according to one of the foregoing Patent Claims, characterised in that there is situated, on the transport carriage (27), symmetrically to the axis of symmetry (y-y) of the guide (45), an emplacement (59) for moving away a collecting bin (48) for the moulded articles dropping from the injection moulds (S), and to be transported away from the machine base by means of a conveyor belt (46) extending parallel to the injection axis (x-x).

**Revendications**

1. Dispositif de changement de moule sur un groupe de machines de moulage par injection de matière plastique qui comportent chacune un moule de moulage par injection (S) pouvant être serré dans l'espace de serrage des moules (F) d'une unité de fermeture des moules et muni d'éléments de guidage (plaques d'appui 41), et une unité horizontale de moulage par injection, laquelle peut être déposée dans une position de dépose et comprend une unité de ramollissement (52) pouvant être désaccouplée, comprenant des tables de changement de moule (19), lesquelles, à chaque fois, sont disposées contre le côté arrière (z) d'une machine de moulage par injection, sont munies de guidages de moules (G') destinés à deux emplacements de moules (A ; B) et peuvent être déplacées parallèlement aux axes d'injection (x-x) des machines de moulage par injection de telle manière que leurs guidages de moules (G') constituent alternativement, avec un guidage de moules (G) disposé dans l'espace de serrage des moules (F), une voie de transport (G', G) qui s'étend transversalement par rapport à l'axe d'injection (x-x) et sur laquelle un moule de moulage par injection (S), au moyen d'un dispositif de déplacement des moules, peut être amené depuis l'espace de serrage des moules (F) sur la table de changement (19), et inversement, et comprenant un dépôt de moules (44) comportant une pluralité d'emplacements de dépôt (44a), ainsi qu'un dispositif de transport destiné au transport des moules de moulage par injection (S) entre les tables de changement de moule (19) et les emplacements de dépôt (44a), ledit dispositif de transport étant un véhicule de transport (27) qui est muni d'un dispositif de déplacement des moules et d'un guidage de moules (G"), qui comporte un emplacement pouvant tourner d'au moins 180° (plaque porteuse 27h) et qui peut être amené alternativement, dans un guidage (45) s'étendant parallèlement aux axes d'injection (x-x), dans une position de raccordement dans laquelle un guidage de moules (G") du véhicule de transport réglable en hauteur (27) constitue une voie de transport (G", G' ; G" G"') avec l'un des deux guidages de moules (G') de la table de changement (19) ou avec un guidage de moules (G"') d'un emplacement de dépôt (44a), cependant que les machines de moulage par injection qui sont placées sur l'un des côtés du guidage (45) sont disposées symétriquement par rapport à celles qui le sont sur l'autre côté, caractérisé par le fait que, pour former une unité de transport (E), l'unité de ramollissement (52) peut être posée sur une palette (53) dont les éléments de guidage (éléments de plaques d'appui 53a) correspondent aux éléments de guidage (plaques d'appui 41) du moule de moulage par injection (S), et par le fait que des sections de prolongement (19') des tables de changement (19) comportent à chaque fois un autre guidage de moules (G^{IV}) qui s'étend transversalement par rapport aux axes d'injection (x-x), et que le véhicule de transport (27) peut être amené alternativement dans la position de raccordement dans laquelle le guidage de moules (G") du véhicule de transport (27) constitue des voies de transport (G", G^{IV} ; G", G"') destinées aux unités de transport (E) avec ce guidage de moules (G^{IV}) et avec le guidage de moules (G"') d'un emplacement de dépôt (44a).

2. Dispositif de changement de moule selon la revendication 1, caractérisé par le fait que la palette (53) comporte deux éléments de plaque d'appui (53a) qui correspondent aux plaques d'appui (41) d'un moule de moulage par injection (S), qui sont reliés entre eux par une plaque de support (53b) et qui sont munis d'organes d'accouplement (rainures transversales 13, 13a) destinés à la prise du dispositif de déplacement des moules du véhicule de transport (27).

3. Dispositif de changement de moule selon la revendication 1 ou 2, caractérisé par le fait que les plaques d'appui (41) ou, respectivement, les éléments de plaques d'appui (53a) peuvent être déplacés au choix sur les guidages de moules (G, G', G", G"', G^{IV}) au moyen de chaînes sans fin transporteuses (20 ; 20') qui sont disposées au-dessous de ceux-ci sur la table de changement (19) et sur la table de transport (27).

4. Dispositif de changement de moule selon l'une des revendications précédentes, caractérisé par le fait que l'unité de ramollissement (52) qui est entourée à chaque fois par un tube à section rectangulaire (52c) à surface de pose horizontale (52c') peut être soulevée depuis sa position de dépose dans la machine de moulage par injection et abaissée verticalement sur la palette (53) reçue par le guidage de moules (G^{IV}) pour former l'unité de transport (E), des goujons de centrage (53c) de la plaque de support (53b) pénétrant en la centrant dans des trous de centrage de la surface de pose (52c').

5. Dispositif de changement de moule selon l'une des revendications précédentes, caractérisé par le fait que les guidages de moules (G', G") situés sur la table de changement (19) et sur le véhicule de transport (27) sont constitués par des baguettes de guidage, que le guidage de moules (G) situé dans l'espace de serrage des moules (F) est constitué par des éléments d'appui (18) et par des surfaces de serrage des porte-moules (12, 28), et que le guidage de moules (G^{IV}) situé sur la section de prolongement (19') est constitué par un profilé en tôle (60), le brin tirant ou, respectivement, poussant des chaînes transporteuses (20, 20') s'étendant le long du bord inférieur d'une plaque d'appui (41) ou, respectivement, d'un élément de plaque d'appui (53a).

6. Dispositif de changement de moule selon l'une des revendications 4 et 5, caractérisé par le fait que les guidages de moules (G^{IV}) destinés aux unités de transport (E) sont disposés sur les moitiés des sections de prolongement (19') qui sont tournées vers le guidage (45), et que les autres moitiés sont réalisées sous la forme de places d'adaptation (Ap) destinées aux unités de ramollissement (52) qui peuvent être déplacées depuis leurs positions de dépose dans les machines de moulage par injection, par l'intermédiaire des places d'adaptation (Ap) ou par l'intermédiaire des palettes (53) pouvant être guidées dans les guidages (G$^{IV}$), au choix, et qui peuvent être déposées à cet endroit dans une position axiale correspondant à leur position axiale dans la position de dépose.

7. Dispositif de changement de moule selon la revendications 6, caractérisé par le fait que, dans la place d'adaptation (Ap), une plaque d'appui verticale (57) peut être posée axialement contre la vis sans fin de déplacement (56) de l'unité de ramollissement (52), par l'intermédiaire de ressorts (58) tendus au préalable et à l'aide d'un vérin hydraulique horizontal (90), les raccordements d'adaptation des conduits d'alimentation (54) destinés à l'unité de ramollissement (52) pouvant être commandés simultanément par ce vérin hydraulique (figures 11 à 16).

8. Dispositif de changement de moule selon l'une des revendications précédentes, caractérisé par le fait que deux colonnes verticales (27f) sont ancrées dans le socle (27e) du véhicule de transport (27) qui reçoit l'ordinateur destiné au dispositif de changement de moule, symétriquement par rapport à l'axe de symétrie (y-y sur les figures 9 et 19) du guidage (45) posé dans le sol, et par le fait qu'un chariot muni d'une plaque de support horizontale (27c) peut être guidé verticalement dans des guidages (27f') de ces colonnes, et qu'un disque (27b), lequel reçoit le guidage de moules (G'') et la chaîne transporteuse (20') au moyen d'une plaque porteuse (27h sur les figures 4 et 17), est monté sur cette plaque de support (27c) en pouvant tourner de 180°.

9. Dispositif de changement de moule selon l'une des revendications précédentes, caractérisé par le fait que les plaques d'appui (41) ou, respectivement, les éléments de plaques d'appui (53a) des moules (S) ou, respectivement, des unités de transport (E) qui sont posés sur les emplacements de dépôt (44a) et sur les tables de changement (19) des machines de moulage par injection situées du côté du dépôt sont contigus à un plan commun vertical parallèle au guidage (45), les plaques d'appui (41) ou, respectivement, les éléments de plaques d'appui (53a) des moules (S) ou, respectivement, des unités de transport (E) qui sont posés sur les emplacements de dépôt s'élevant plus haut vers l'avant que ces emplacements de dépôt (44a).

10. Dispositif de changement de moule selon l'une des revendications précédentes, caractérisé par le fait qu'une surface de pose (59), laquelle est prévue pour l'évacuation d'un bac collecteur (48) destiné aux pièces moulées qui tombent des moules de moulage par injection (S) et qui peuvent être transportées hors du socle de la machine par une bande transporteuse (46) s'étendant parallèlement à l'axe d'injection (x-x), est disposée sur le véhicule de transport (27), symétriquement par rapport à l'axe de symétrie (y-y) du guidage (45).

FIG. 1

EP 0 246 398 B1

FIG. 2

15

FIG. 3

## FIG. 3a

FIG. 4

FIG. 5

44a

62' 44d 44f

62'

44b

G'''

44d 44f

40 27c' 41 74 27c

27h

S

62

19c

13 19b 20' 26

27c' 19a

FIG. 5a

91

FIG. 5b

19c

91

19b 19a 20'

FIG. 6

FIG. 7

FIG. 8

FIG. 9

FIG. 10

FIG.11

FIG.12

# FIG.13

FIG.14

FIG.15

FIG.16

Ap

58 56 52a 52 52c 52a 12

57
57a

75

73 53 53b 53c
55 60a

90 G^{IV}
57a 55a 53a 65 60 52c'
54 19' 19

89 85
86 87

70'

88 72

EP 0 246 398 B1

FIG.17

EP 0 246 398 B1

FIG.18

FIG.19

FIG.20

FIG.21